# EUROPEAN PATENT SPECIFICATION

(11) **EP 0 620 707 B1**
(45) Date of publication and mention of the grant of the patent: **28.01.1998**
(21) Application number: 92923823.6
(22) Date of filing: 19.11.1992
(51) Int. Cl.: A01N 63/00, D21H 21/04, C02F 1/50

(54) **A METHOD TO COMBAT MICROBES**
VERFAHREN ZUR BEKÄMPFUNG VON MIKROBEN
PROCEDE DE LUTTE CONTRE LES MICROBES

(30) Priority: 19.11.1991 FI 915462
(43) Date of publication of application: 26.10.1994
(73) Proprietor: KEMIRA OY, SF-02271 Espoo (FI)
(72) Inventor: VÄÄTÄNEN, Pentti, SF-65370 Vaasa (FI)
(74) Representative: Dost, Wolfgang, Dr.rer.nat., Dipl.-Chem.
(86) International application number: FI9200313
(87) International publication number: WO9309671

(56) References cited:
- EP-A- 0 408 220
- WO-A-90/02794
- WO-A-91/05475
- DE-A- 3 741 583
- GB-A- 2 036 792
- PATENT ABSTRACTS OF JAPAN, Vol. 13, No. 491, C650; & JP,A,01 193 203, publ 1989-08-03 AKIO TANII.
- STN International, File BIOSIS, STN Accession No. 90:289822, DUTRECQ A. et al.: "Identification and study of the activity of certain antagonistic organisms of gaeumannomyces-graminis-var-tritici", Ann Gembloux 95 (4) 1989, 285-300.
- Canadian Journal of Microbiology, Vol. 18, No. 7, 1972, E. MOORE-LANDECKER et al.: "Inhibition of fungal growth and sporulation by volatile metabolites from bacteria", see page 957 - page 962.

## Description

The invention relates to a natural microbiological method for suppressing/inhibiting the growth of harmful fungi in the paper and process industry

The process waters used in paper industry offer advantageous growth conditions for micro-organisms, bacteria in particular but also for fungi. These process waters contain nutrient substances that are advantageous for the - growth of micro-organisms and offer otherwise suitable conditions for growth. The pH-value (7 to 8) close to the neutral one favours bacterial growth, whereas the acid is pH range (pH 5 to 6) is advantageous for fungi. The temperature of the process waters of paper and board machines, very often in the range of 40 to 60°C, is very suitable for many microbes, for bacteria in particular. The fungal growth usually stops at about 50°C or just above.

It has been observed in practice that it is possible to produce high quality paper and board even when the bacterial concentration of the circulating waters is rather high (10⁷ to 10⁸ per ml). Microbes disturbing the production process of paper and board may sometimes appear in the midst of a conventional bacterial population. Most production problems, and above all the runnability ones, are caused by filamentous fungi and bacteria with a tendency to form disturbing clusters. The fungi have an important role as a factor interfering with the runnability. Cases where the filamentous bacteria have formed deposits (cluster frames) have been observed more rarely, so far.

The filaments of fungi may accumulate a.o. fibers, fibrils, resins, bacteria and filling materials plus colour particles. Sometimes the clusters/deposits are slimy. Without these filamentous "frame-builders" of clusters/deposits the productivity of paper and board machines would be better than today.

To combat these harmful microbes causing clusters/deposits, specialty chemicals, microbicides, are used. Unfortunately, they are efficient not only against the harmful microbes, but also against the microbes that do not interfere with production. Other disadvantages of chemical microbicides are their possible toxicity to humans and animals and their possible remnants in paper and board.

The present invention is based on the idea that the fast-growing, harmless bacteria might be useful, from the point of view of the control of harmful microbes as they conquer living space from the slower growing fungi, thus inhibiting their growth. So far, to anybody's knowledge, there is no such chemical the influence of which could be directed solely against the harmful microbes so that the chemical would not have any influence on the other microbes as well.

Surprisingly, it has now been observed that in combatting the most harmful microbes, namely the fungi, harmless, fast-growing bacteria may be utilized. The ability of bacteria to suppress the growth of fungi may be based on several mechanisms. One of them is the faster growth rate of bacteria in comparison with the fungi, whereby they are able to replace the fungi in their common growth environments by the way well known in microbiology. Another possibility of inhibition are the metabolites excreted by the mentioned bacteria that are harmful to the fungi. The third way of mechanism are the enzymes produced by the bacteria, for example the lytic enzymes like chitinases decomposing the cell walls of the fungi.

The objective of the invention is to utilize as naturally as possible the bacteria of the process water itself. There are several alternatives to choose from. One of the possibilities is chemical, comprising the choice of a chemical microbicide not effective against the suppressing bacteria but effective against the harmful microbes. In this way the growth of the suppressing bacteria might be enhanced and this in turn would weaken the growth possibilities of the harmful fungi. This alternative would be a modification of the chemical method used today and cannot be considered as a natural one. Unfortunately, most microbiocides have a wide range of effectiveness and that is why finding the right substance would mean continous balancing between effectiveness and undesirable effects of the chemical.

The objective of the present invention is to provide a natural control method that is more selective than the previous art. According to the invention, it is possible to inject into the circulating waters, at suitable time intervals, suppressing bacteria to suppress the growth of fungi and filamentous bacteria. The suppressing bacteria can be produced in a fermentor. In advance, these bacteria have to be proved harmless from the point of view of the production process.

The advantageous suppressing bacteria to be used in the method according to the invention include some Pseudomonas and Enterobacter bacteria with strong growth characteristics. These bacteria have been observed to be able to suppress in an efficient way the growth of yeasts and mildew fungi (molds), and in optimal cases even to destroy them. The suppressing bacteria used in the method according to the invention have been isolated from the circulation waters of paper and board mills. The bacterial strain Pseudomonas antimicrobica is available in the NCIMB culture collection by the deposit number 9898. The suppressing bacteria should be added to the concentration of 10² per millilitre.

The natural method according to the invention is described in a more detailed way in the following examples.

### Example 1

The suppressing bacteria were isolated from the circulation waters of paper and board mills by using a culture medium (DIFCO) with the following composition:

| | |
|---|---|
| trypton | 2.5 g |
| yeast extract | 5.0 g |
| dextrose | 1.0 g |
| agar | 15.0 g |
| water | 1000 ml |
| pH | 7.0 ± 0.2 |

The membrane filter method (filter diaphragm method) was used. The agar plates were incubated for 2 days at 37°C.

The fungi (yeast and mildew fungi) were also isolated from the circulation waters of paper and board mills by using a MYGP culture medium:

| | |
|---|---|
| malt extract | 3.0 g |
| yeast extract | 3.0 g |
| peptone | 5.0 g |
| glucose | 10.0 g |
| agar | 20.0 g |
| water | 1000 ml |
| pH | 5.5 |

The agar plates were incubated for 3 to 5 days at 30°C by using the membrane filter for method.

### Example 2

Here, the ability of the bacteria isolated from the circulation waters to suppress the growth of the fungi in a dilute nutrient solution was tested. The bacteria and the fungi were given similar possibilities to growth by inoculating them simultaneously into the solution.
A) Bacteria isolated from the circulation water of a board mill (the concentration of the most common bacteria in the circulation waters was in the range of 10⁷ per ml and that of the rare ones about 10³ per ml) were inoculated, each one of the six different ones, to grow for three days in a dilute nutrient solution with the following composition (mg per litre):

| | |
|---|---|
| tryptone | 330 |
| glucose | 240 |
| yeast extract | 240 |
| peptone | 120 |
| malt extract | 70 |
| pH | 7,0 |

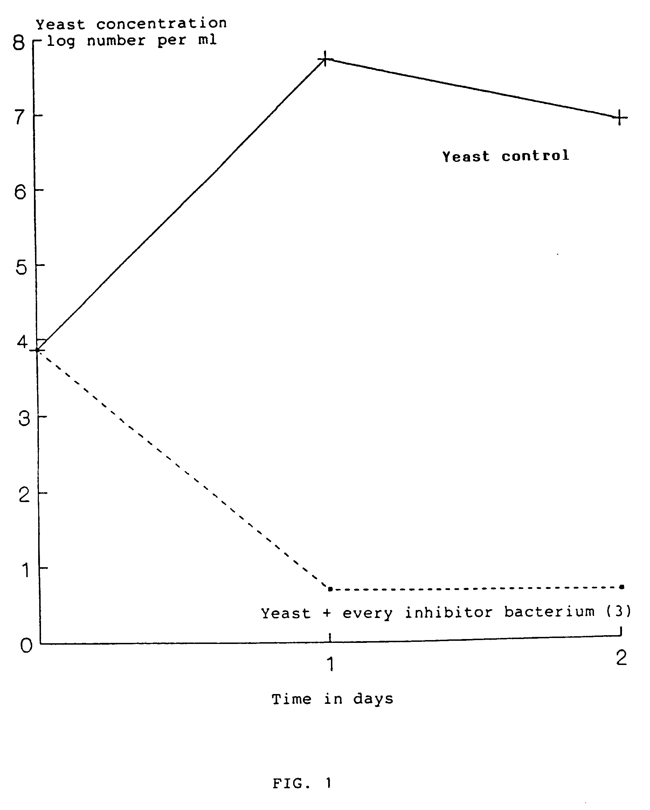

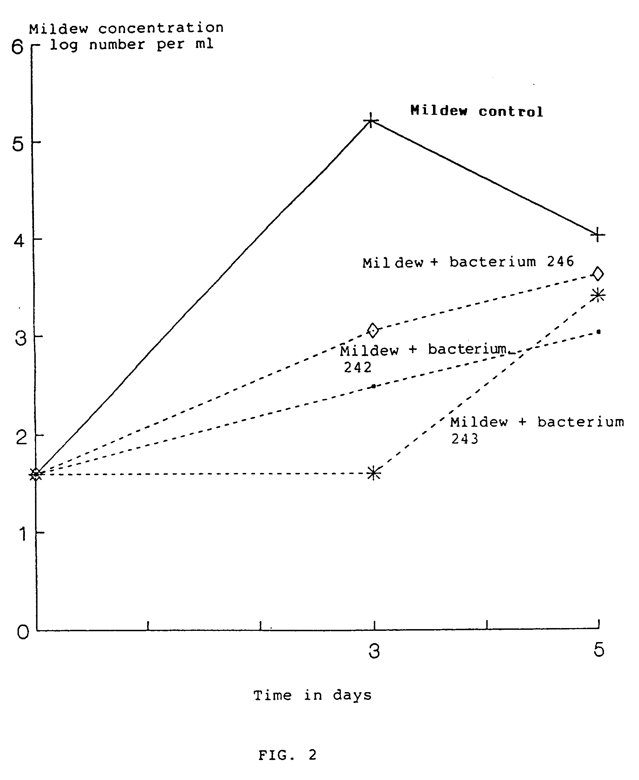

The number of the suppressing bacteria inoculated was 10⁴ to 4x10⁵ per ml. Simultaneously, yeasts isolated from the circulation of the same mill were inoculated to the culture solution of each bacterium. The reference diluent control was inoculated with yeasts only.
Incubation was carried out at 30°C (Examples 2, 3, 4A, and 4F) and at 37°C (examples 4C to 4E) in Erlenmeyer flasks (50 ml of nutrient solutions in flasks of 100 ml). In Example 4B the temperature was 25°C. The number of bacteria and yeasts was determined again after the incubation given above. The results are shown in Fig. 1.
The yeast grew extraordinarily well in the control, reaching a concentration of about 10⁸ per ml in one day. On the contrary, the yeasts were destroyed in the presence of all of the three bacteria and the concentration of the yeasts remained in all cases under 10 per ml. The suppressing bacteria used were identified as follows: Pseudomonas alcaligenes and Enterobacter agglomerans.
B) The experiment was performed otherwise in the same way as in point A but now the microbe to be suppressed was, instead of the yeast fungus, a mildew fungus (mold) isolated from the same board mill. The suppressing bacteria were the same as above. Bacteria were added to the concentration of 10⁴ to 5x10⁴ per ml and incubated for 5 days in the nutrient solution. The results are given in Fig. 2. The bacterium 242 is E. agglomerans, the bacterium 243 is P. pseudoalcaligenes and the bacterium 246 is E. agglomerans.

The mildew fungus of the control easily grew to a concentration of about 10⁵ per ml in the nutrient solution. Its growth was clearly slowed down by the bacteria, the bacterial strain 243 (P. pseudoalcaligenes) in particular. The difference compared with the control was at its biggest by the third day, more than 3 log units, remaining by 5 days at about 1 log unit. In practice, a growth suppression for 3 days is, however, fully sufficient. Using microbicides, such a long-time influence cannot be achieved by just one chemical dose.

Example 2 shows that the bacteria Pseudomonas and Enterobacter, with their strong growth characteristics, are able to suppress, in an efficient way, the growth of both yeast and mildew fungi, and in an optimised case, even to destroy them.

### Example 3

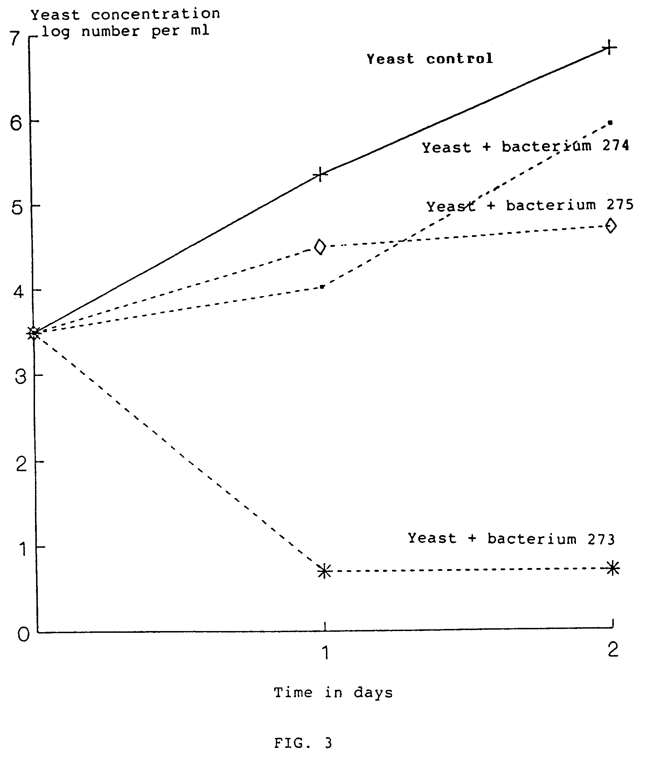

Deviating from the methods given in Example 2, in this experiment a method was used whereby the bacteria were inoculated for one night in the nutrient solution, after which time the concentration of bacteria was 10⁷ to 10⁹ per ml. After this, the yeast to be combatted was mixed in and grown for 2 days at 30°C. The idea was to simulate a situation whereby a harmful fungus from the same circulation water tries to conquer space amongst the abounding bacterial population of the circulation waters. At this stage, the microbes were given a nutrient supplement (the same nutrients as in Example 1). The results are given in Fig. 3. The yeast grew well in the control but, in the presence of the bacterial strain 273 (Pseudomonas cepacia) it did not grow at all, and in 1 to 2 days the yeast was totally destroyed. This indicates that the respective suppressing bacterium was especially strong. The bacterial strain 274 is Enterobacter agglomerans, the same as the strain 275.

From these results it is possible to draw the conclusion that the method comprising the primary growth of the suppressing bacteria works well.

### Example 4

In these experiments, groundwood pulp from the above-mentioned board mill was used. Its consistency was adjusted to 2%. The age of the groundwood pulp in this experiment was 1 to 17 weeks.

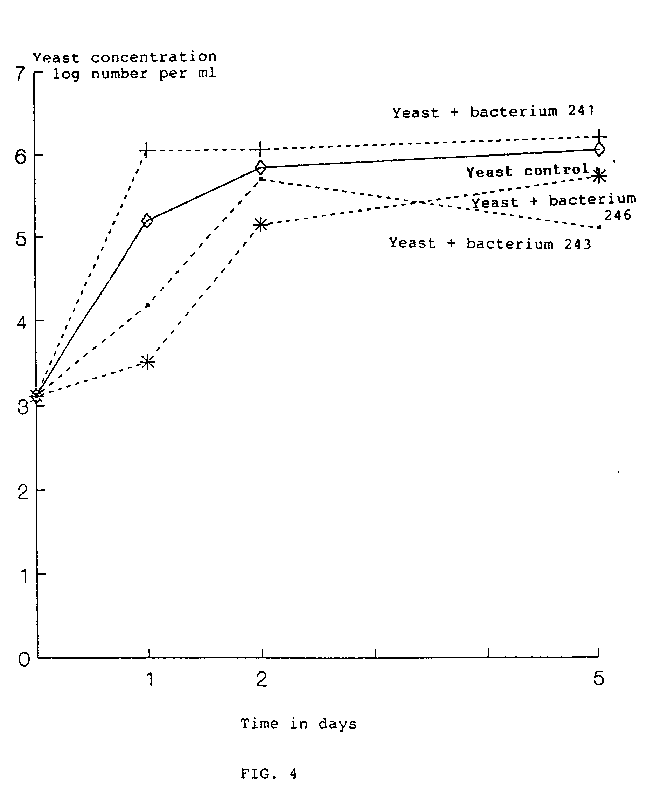

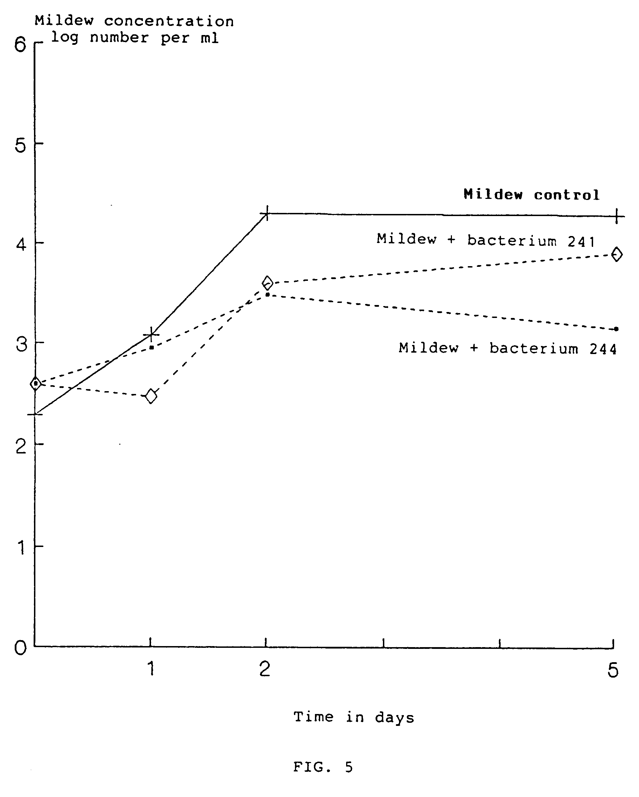

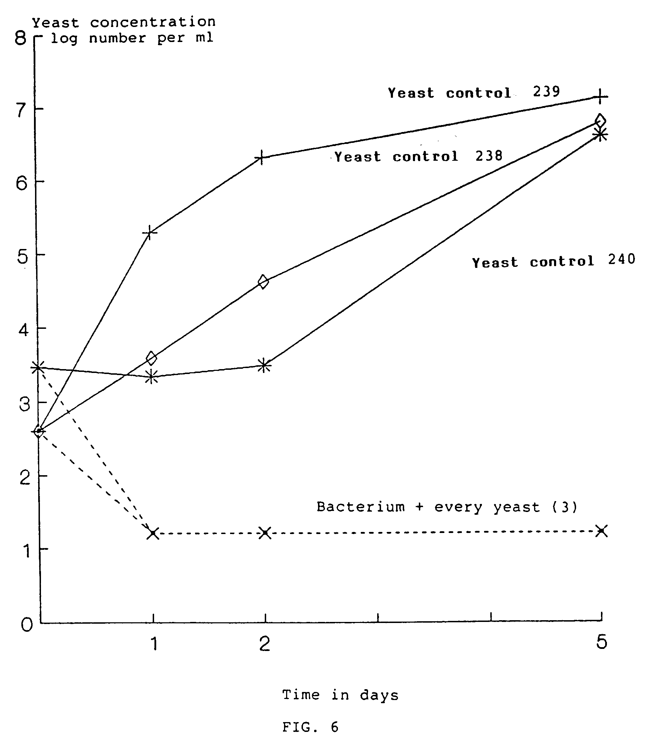

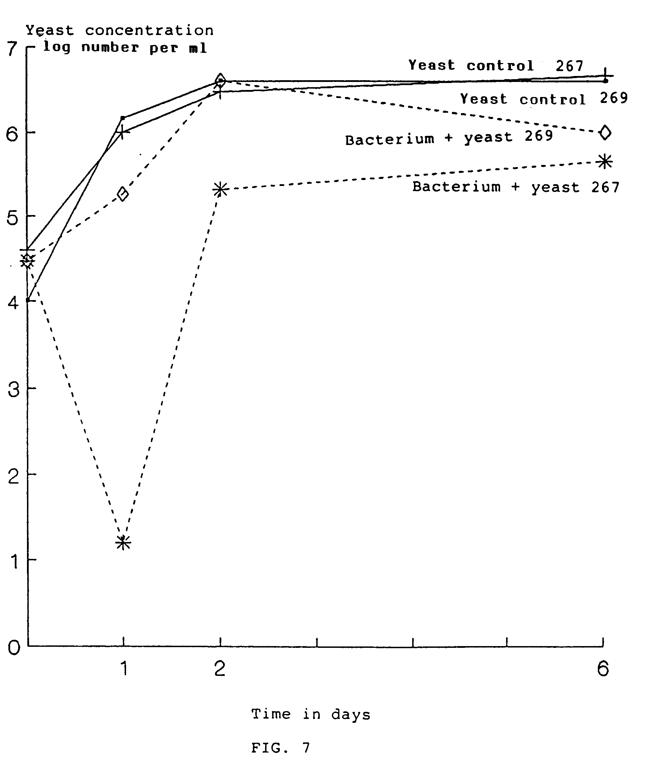

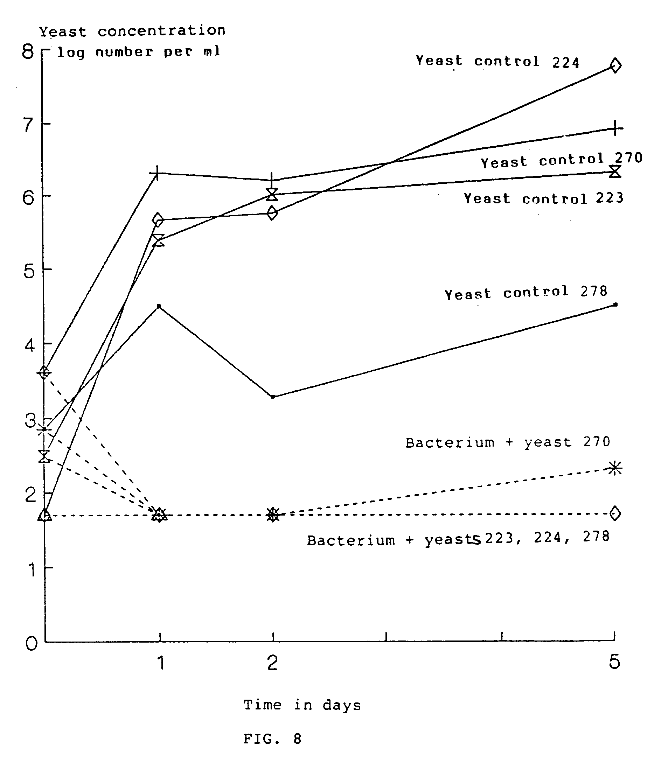

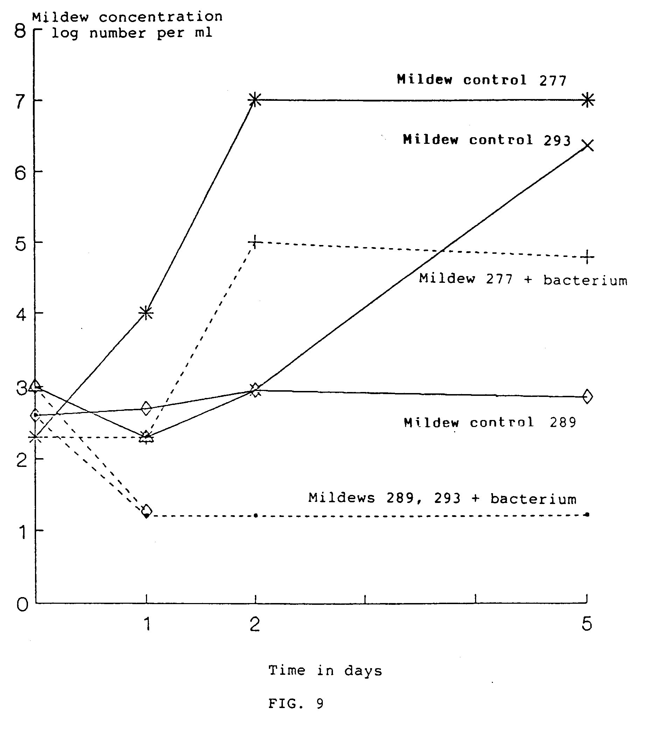

The groundwood pulp was sterilized and the suppressing bacteria isolated from the same mill were incubated in it for one day beforehand. Then the fungus to be combatted was inoculated to the groundwood pulp. The control consisted of the fungus alone in sterile groundwood pulp.
A) The yeast to be combatted and the suppressing bacteria were the same as in Example 2A where all of the bacteria were capable of destroying the yeast completely (see Fig. 1). The initial/start concentration of the suppressing bacteria was 2x10³ to 5x10⁴ per ml. Incubation occured for 3 days at 30°C, the pH was about 5. The same bacteria did not work as well in the sterile groundwood pulp as in the nutrient solution. Best in slowing down the growth of yeast was the strain 246 E. agglomerans (Fig. 4) that was able to suppress the growth of the yeast for two days. The bacterial strain 241 also is E. agglomerans.
   In comparison with Example 2A, in this experiment aged groundwood pulp, was used as a growth medium among others, and evidently it did not contain a sufficient amount of nutrients for the proper functioning of the suppressing bacteria or for their multiplication. In practice, a continuous supplement of nutrients however, is flowing to the circulation waters, among others, along with fresh groundwood pulp.
B) When the experiment according to the method given in point A was performed by using mildew (a mold) as the fungus to be combatted, it was observed that the method worked better against mildew (Fig. 5) than against yeast (Fig. 4). The start concentration of the bacteria used was 6x10 per ml. The microbes were grown for 5 days at 25°C, pH being about 5. At its best, the effect given by the bacteria (bacterial strain 244, Pseudomonas maltophilia) was just over 1 log unit.
C) In this experiment (Fig. 6) the bacterium Pseudomonas antimicrobica NCIMB 9898, well known in plant protection, was used as the suppressing bacterium. The start concentration was 8x10⁴ per ml. Three yeasts from a board mill were used as the fungi to be combatted. The microbes were grown for 6 days at 37°C, pH being about 5. The yeasts in the controls grew well in the groundwood pulp up to a concentration of 10⁶ to 10⁷ per ml. The Pseudomonas bacterium alone grew to the concentration of about 10⁷ per ml in the pulp. When it was present, the yeasts did not grow at all. The concentrations of the yeasts remained under 10² per ml during the experiment (5 days).
D) In this experiment (Fig. 7), the combatting result of P. antimicrobica against the yeast strains 267 and 269 was not as good as that of other bacteria in experiment B used against other yeast strains. The best result was achieved against yeast 267. The suppressing influence was maintained during 1 to 2 days.
E) In this experiment, the ability of P. antimicrobica to suppress the growth of the yeasts isolated from different mills was tested. It was observed that P. antimicrobica worked excellently against four yeasts coming from different mills (Fig. 8). In the presence of the bacterium, the yeast concentrations remained under the level of 10² per ml, whereas the respective concentrations in the controls were in the range of 10⁶ to 10⁸ per ml.
F) In this experiment, the ability of P. antimicrobica to suppress the growth of paper mill mildews (molds) was tested after the bacterium had been grown for 1 day in advance in a model pulp. The bacterium suppressed well the growth of the mildews (Fig. 9). In one case, the influence remained at 2 log units but in the two other gases the mildews did not grow at all in the presence of the P. antimicrobica bacteria.

The yeasts and mildew fungi used in the above experiments were not identified.

## Claims

1. A method to combat the growth of harmful fungi in industrial process waters, **characterized** in that bacteria, harmless from the point-of-view of the production and isolated from the process waters or from elsewhere, are added to the process waters, said bacteria being selected from the group Enterobacter, Pseudomonas alcaligenes, Pseudomonas pseudoalcaligenes, Pseudomonas cepacia, Pseudomonas maltophilia, and Pseudomonas antimicrobica.

2. A method according to claim 1, **characterized** in that the bacterium is the Pseudomonas antimicrobica NCIMB 9898.

3. A method according to claim 1 or 2, **characterized** in that the bacteria are added up to the concentration of at least 10² per ml.

4. A method according to claim 1, **characterized** in that the fungus is a mildew or yeast fungus.

5. A method according to claim 1, **characterized** in that the suppressing bacteria are added to groundwood pulp.

## Patentansprüche

1. Verfahren zur Bekämpfung des Wachstums schädlicher Pilze in industriellem Brauchwasser, dadurch gekennzeichnet, daß Bakterien, die von der Produktion her gesehen unschädlich sind und aus Brauchwasser oder woandersher isoliert wurden, dem Brauchwasser zugesetzt werden, wobei die Bakterien ausgewählt sind aus der Gruppe Enterobacter, Pseudomonas alcaligenes, Pseudomonas pseudoalcaligenes, Pseudomonas cepacia, Pseudomonas maltophilia und Pseudomonas antimicrobica.

2. Verfahren nach Anspruch 1, dadurch gekennzeichnet, daß das Bakterium Pseudomonas antimicrobica NCIMB 9898 ist.

3. Verfahren nach Anspruch 1 oder 2, dadurch gekennzeichnet daß die Bakterien bis zu der Konzentration von mindestens 10² pro ml zugesetzt werden.

4. Verfahren nach Anspruch 1, dadurch gekennzeichnet, daß der Pilz ein Mehltau- oder Hefepilz ist.

5. Verfahren nach Anspruch 1, dadurch gekennzeichnet, daß die unterdrückenden Bakterien Holzmehlpulpe zugesetzt werden.

## Revendications

1. Procédé pour combattre la croissance de champignons nocifs dans les eaux industrielles de traitement, caractérisé en ce que l'on ajoute aux eaux de traitement des bactéries non nocives du point de vue de la production et isolées à partir des eaux de traitement ou à partir de tout autre milieu, lesdites bactéries étant sélectionnées dans le groupe comprenant Enterobacter, Pseudomonas alcaligenes, Pseudomonas pseudoalcaligenes, Pseudomonas cepacia, Pseudomonas maltophilia, et Pseudomonas antimicrobica.

2. Procédé selon la revendication 1, caractérisé en ce que la bactérie est Pseudomonas antimicrobica NCIMB 9898.

3. Procédé selon la revendication 1 ou 2, caractérisé en ce que les bactéries sont ajoutées jusqu'à la concentration d'au moins 10² par ml.

4. Procédé selon la revendication 1, caractérisé en ce que le champignon est une rouille ou un champignon de levure.

5. Procédé selon la revendication 1, caractérisé en ce que les bactéries de suppression sont ajoutées à une pâte de bois mécanique.
